Europäisches Patentamt

European Patent Office

Office européen des brevets

(19)

(11) Publication number: **0 092 017 B1**

## (12) EUROPEAN PATENT SPECIFICATION

(45) Date of publication of patent specification: **13.03.91**

(51) Int. Cl.⁵: **G01S 13/78, G01S 7/28**

(21) Application number: **82830248.9**

(22) Date of filing: **05.10.82**

(54) Radar Interrogator Apparatus.

(30) Priority: **06.10.81 IT 4943981**

(43) Date of publication of application:
**26.10.83 Bulletin 83/43**

(45) Publication of the grant of the patent:
**13.03.91 Bulletin 91/11**

(84) Designated Contracting States:
**DE FR GB NL SE**

(56) References cited:
**US-A- 4 099 180**

**IEE PROCEEDINGS-F/COMMUNICATIONS, RA-
DAR AND SIGNAL PROCESSING, vol. 128,
part F., no. 1, February 1981, pages 43-53,
Old Woking, Surrey, GB,M.C.STEVENS et al.:
"Multipath and interference effects in sec-
ondary surveillance radar systems"**

(73) Proprietor: **SELENIA INDUSTRIE ELET-
TRONICHE ASSOCIATE S.p.A.
Via Tiburtina, KM 12.400
I-00131 Roma(IT)**

(72) Inventor: **Chierici, Roberto
Via Ludovico Antonio Muratori, 17
Livorno(IT)**
Inventor: **Ronconi, Roberto
Via Monte Bianco, 95
Guidonia (Roma)(IT)**

(74) Representative: **Gustorf, Gerhard, Dipl.-Ing.
Patentanwalt Dipl.-Ing. Gerhard Gustorf
Bachstrasse 6 A
W-8300 Landshut(DE)**

**Description**

The present invention regards a perfectioning in reply type radar systems, in particular the SSR (Secondary Surveillance Radar) or IFF (Identification Friend or Foe) types. These radar systems consist of a transceiver on land (interrogator) having a system of rotating antenna and a transceiver on board (transponder) which basically utilizes a multi-directional antenna.

The interrogator positioned on land typically emits three impulses (identified later as P1,P2,P3) in order, for example at a frequency of 1030 MHz, with for example peak power levels included between 0,5 and 4 KW.

The time interval between the impulses P1 and P3 irradiated by means of a directional antenna, is related to the particular "mode" of interrogation. The impulse P2 which presents a fixed delay with respect to the impulse P1, is irradiated from a so called "control" beam of the pseudo-multi-directional type, which has the function of avoiding interrogations from the lateral lobes of the directional beam (SLS - Side Lobe Suppression). From this it follows that, at the input of the transponder the ratio between the amplitudes of the impulses P1 and P2 turn out to depend on the azimuth of the air-craft referred to the axis of the directional antenna beam.

Basically the following two cases exist:
- for the azimuths included in a section of the directional beam, so called "effective beam" the ratio P1/P2 is nominally greater than 9 dB.
- for the impulses arriving from the lateral lobes of the-direc tional beam, the ratio -P1/P2 is nominally less than 0 dB. In case "a" the transponder has to reply, in case "b" nominally there should be no replies what has been described is subjected to international normatives (ICAO, STANAG). In practice several legal mal-functions are revealed at the system and at the interactions between the system and the ambient
In particular:
  a) Reflecting surfaces such as airport structures, aircraft on land, buildings, ships ect. are causes of partial deviation of the directional beam for which interrogations of aircraft can be about which are outside the effective interrogation beam.
  b) The surrounding ambient, in particular the radome structure often used to protect the antenna systems, tends to noticea bly deform in an unpredictable fashion the two antenna beams.
  c) A weakness of the SSR/IFF radars consists in the lack of an gular discrimination which creates problems especially in the "terminal" covers where an elevated air-traffic density can be manifested.

In an "on site" optimization procedure use is generally made of reducing the transmission power. This is realized by means of fixed power attenuators, placed in cascade at the transmitter. In other words: the general power of the transmitter is reduced by a fixed amount and in a discriminative way with respect to the specific directions from which the inconvenience was coming. As regards the reflections, optional units exist, which operate on the transmission impulses in such a way as to force blindness of the transponder illuminated by the lateral lobes (IISLS: Improved Interrogator Side Lobe Suppression).

A prior system in which the transmission power is reduced by means of an attenuating member is disclosed in US-A-4,099,180. Moreover, this reference discloses several theoretical possibilities for suppressing or reducing undesired reflecting pulses caused by fixed obstacles i.e. reflectors. As one theoretical alternative for obtaining a suppression of pulses, which constitute false replies, use of a technique called interrogator transmitted power programming is proposed however, this alternative is said to be unuseful, since attenuators capable of handling peak power on the order of 2 to 3 KW, which would be required for this function, are still in the stage of development.

The problem underlying the present invention is to provide an interrogator transponder radar apparatus in accordance with the pre-characterizing clause of claim 1 which overcomes the drawback of the prior art.

This problem is solved by the features stated in claim 1. Specifically, the apparatus of the present invention overcomes several of the disadvantages and inconveniences of the prior art apparatus, which may be summarized as follows:
  - little efficiency;
  - the forced blindness of the transponder tends to diminish the reply probability of the said transponder, to another interrogating sensor;
  - notable hardware impact which in particular is felt either with an appreciable r.f. loss (at least 3 dB) or with the necessity to add a second transmitter.

The present invention is now described with reference to the enclosed diagrams which illustrate more clearly the type of problem which we intend to overcome, some aspects of preceding techniques and the preferred solutions according to the present invention.

Figures:

| Figure 1 | shows the out-going and return relationship (up down link) of the signals of an SSR system: |
|---|---|
| Figure 2 | shows respectively the format of the interrogations and of the replies in an SSR system: |
| Figure 3 | shows the amplitude relation in a side lobe suppression (SLS) system and the antenna diagrams. |
| Figure 4 | shows the effects of reflections in an SSR system, in the presence of on-land obstacles; |
| Figure 5 | shows the distortion effects on behalf of a "radome" which induces false interrogations; |
| Figure 6 | shows geometric aspects associated to the phenomenon of undesired reflection interrogations: |
| Figure 7 | shows well known implementations for reducing parasitic effects (SLS) and (IISLS); |
| Figure 8 | schematically shows the control of the reflection effects by means of the sectorization of the irradiated power; |
| Figure 9 | shows a possible realization for controlling the transmission power in four sectors which make up the emission turn angle; |
| Figure 10 | shows the block diagram of a transmitter according to the technique in figure 9; |
| Figure 11 | shows another possible realization for controlling the transmission power sectoralized in relation to the interrogation a suppression impulses; |
| Figure 12 | shows the block diagram of a transmitter according to the technique in figure 11. |

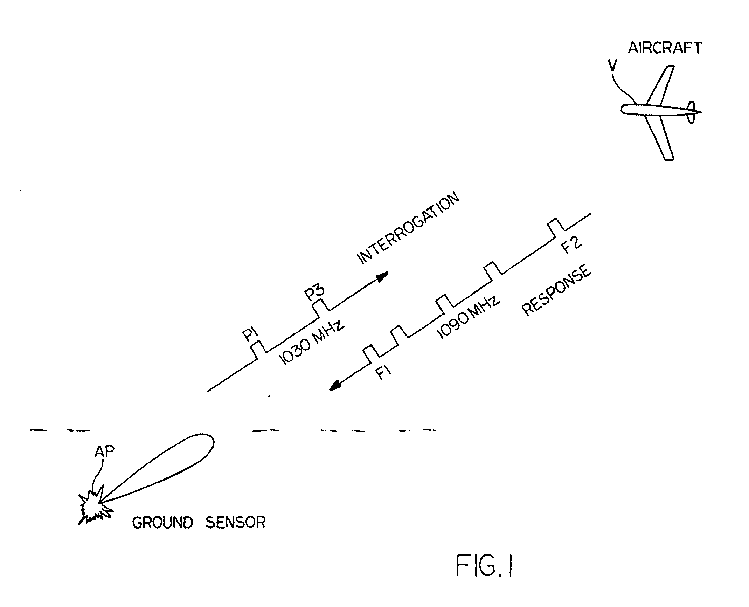

With reference to the diagrams in figure 1 we repeat what has been previously mentioned, that is, the cooperative aspect of the SSR radar.

The on-land system AP emits the interrogation and the on-board transponder positioned on the aircraft V carries out the identification and then in a positive case emits the replica or reply on a different frequency channel.

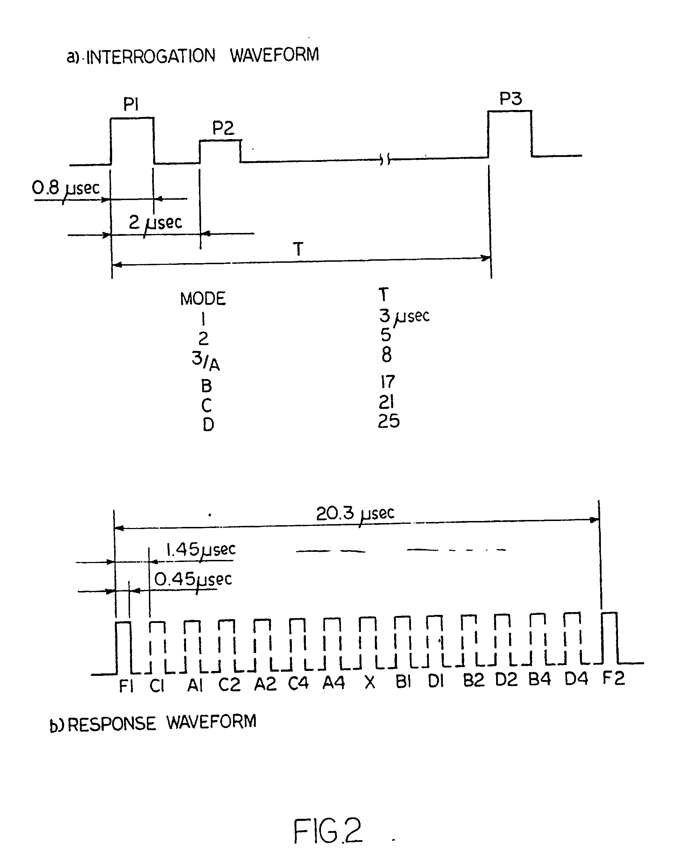

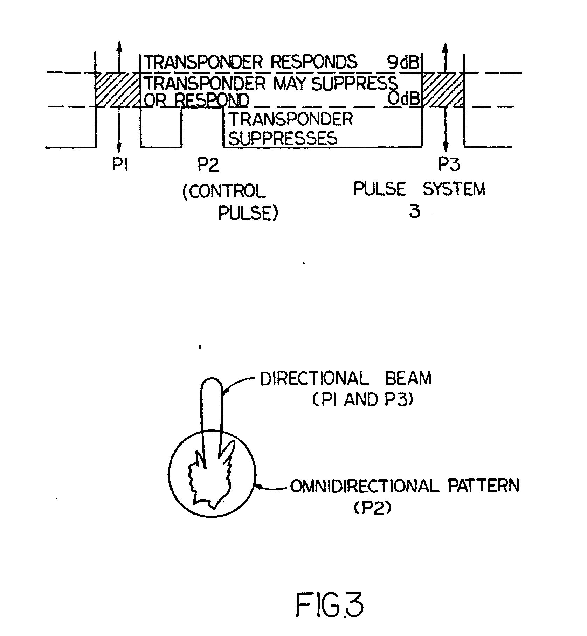

In figure 2 are presented the details of the modulation waveforms associated with the interrogation and the reply. In the schematization of figure 2 related to the interrogation section we note the presence of the impulses P2 whose function will be better illustrated with reference to figure 3.

In effect in figure 3 are shown the amplitude relationships between impulses P1,P3 and the control impulse P2 and the antenna diagrams related to the impulses P1,P3 and P2.

It is noted that the impulses P1 and P3 are emitted on a directional beam which includes a certain number of secondary lobes in various configurations centred on the emission point, while the impulses P2 are emitted from an antenna having an omni-direc tional irradiation diagram (practically circular in the on-land projection).

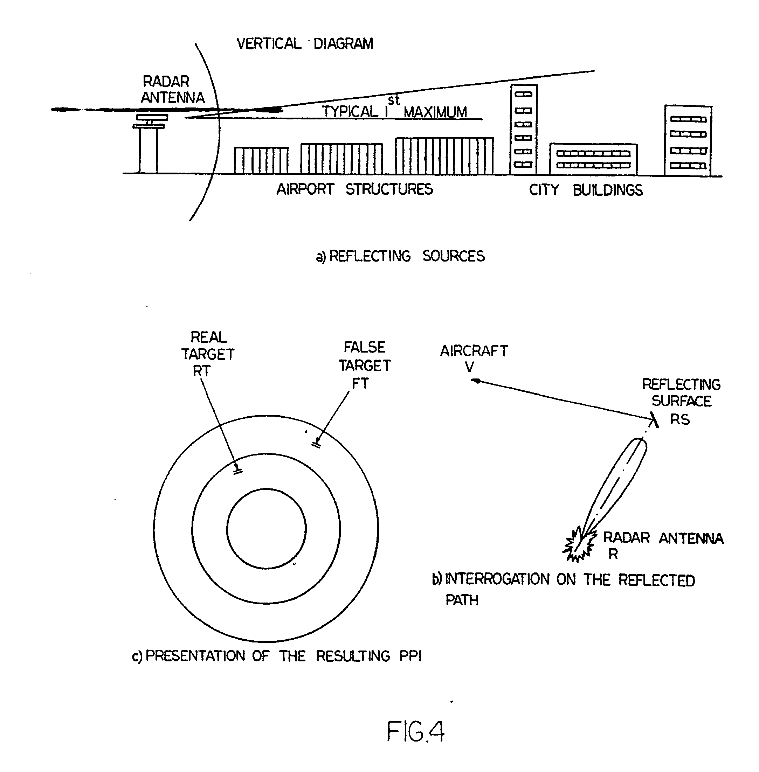

In figure 4 the effect of reflections in the presence of fixed structures are shown (figure 4a).

In figure 4b it is shown how in the presence of a reflecting surface RS an aircraft V "sees" the irradiation from the radar's antenna R in a different angle from the effective angle.

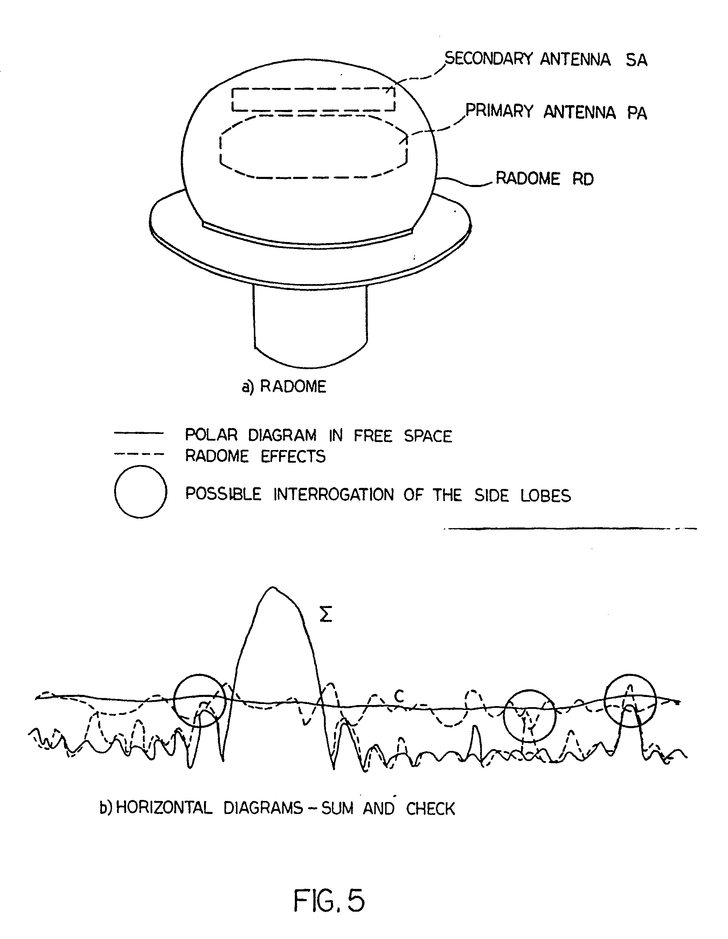

As can be noted from figure 4c, which illustrates a typical PPI presentation, in these circumstances one has a real target RT and a false target FT whose presence is induced by the reflecting surface RS of figure 4b. This is the situation which comes about in the presence of fixed obstacles which are not part of the surveillance radar structure. In figure 5 is shown instead the interrogation effect on behalf of the side lobes induced by distortion caused by the radome, that is the fixed struct ure which normally encloses the rotating antennas. In figure 5a is seen a radome structure including the radome proper RD which encloses a primary antenna PA and an antenna of the secondary radar SA. In figure 5b is reported in cartesian coordinates the polar diagram of the emitted signal in free space and in the pre sence of radome, the distortions induced by the radome, and the events of possible interrogations on behalf of the side lobes caused by the distortions introduced by the radome's fixed structure.

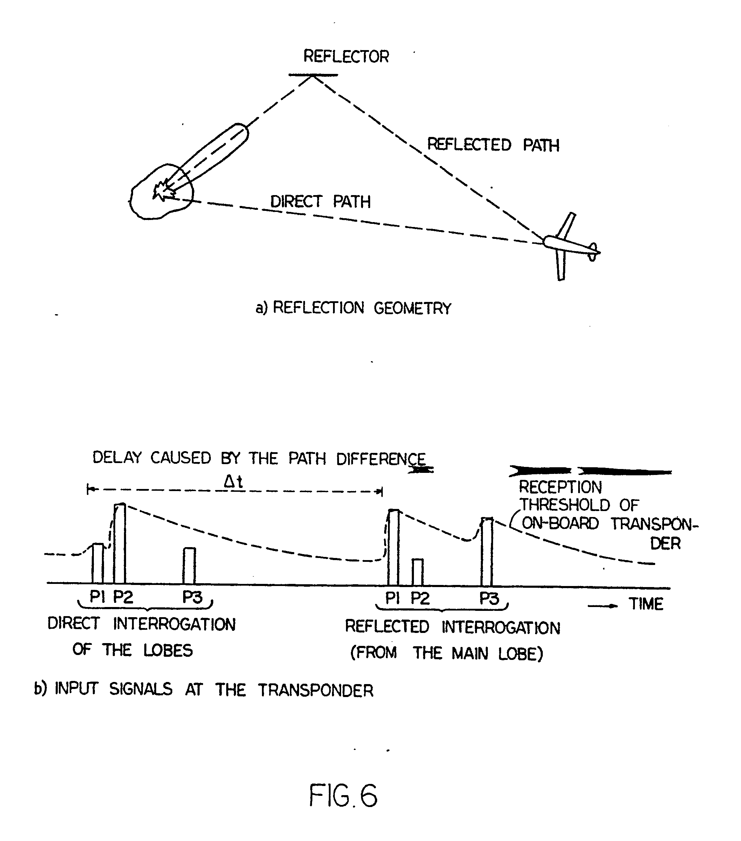

In figure 6 the geometric aspects associated with the interrogation phenomenon by undesired reflections are shown. In the schematization of this figure, one has to note that if the delays of the reflected path is less than the nominal 35 microseconds, and the direct interrogation impulse P1 has an amplitude less than the predetermined threshold the reflected interrogation does not give rise to a reply. In the left-hand case the situation of a direct in terrogation from the side lobes and in the right-hand case a reflected in terrogation from the principal lobe is shown.

Whenever the following two conditions are verified:

  a) the transponder recognizes that the first interrogation comes from lateral lobes and this intercepts the reception;

  b) the delay of the reflected interrogation is less than the in terception time interval;

then the interrogation from the reflection route will not give ri se to any reply. Assuming that the path difference is such as to satisfy the condition b the capability of intrinsic antireflection at the system results inefficient since the shape of the side lobes of the directional beam impedes the verification of condition a. In fact, for circa 80% of the azimuth directions related to the side lobes, the amplitude of the impulse P1 so small that it is not recognised by the transponder which therefore does not detect the interrogation from the side lobes.

The IISLS technique which cannot be generalized since it is exclusively concerned with receivers which satisfy condition b consists in assuring that the condition a is always verified. The action is that of increasing, artificially the level of the side lobes of the directional beam.

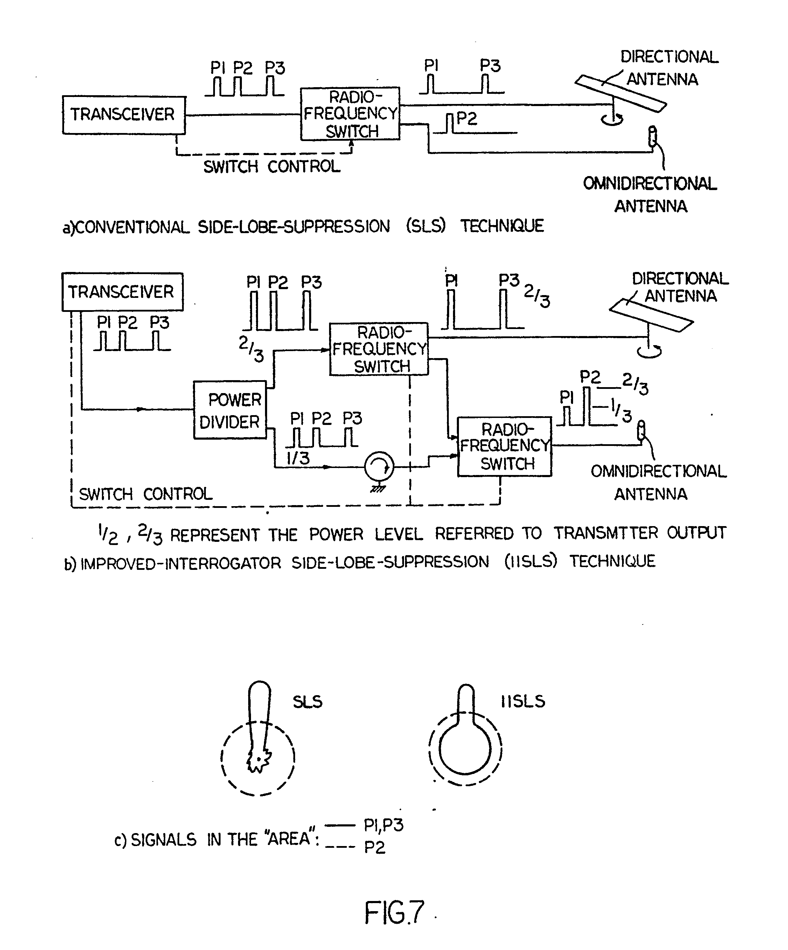

In figure 7 are schematically presented the on-land sensors which are either of the conventional type or of the type equiped with IISLS (figures 7a and 7b). In figure 7c are respectively shown the irradiation diagrams related to the two realisations 7a and 7b. Now the solution adopted by the present invention will be de scribed:

a) as regards the "reflections" it has been brought to notice that there is a big advantage in irradiating the minimum power.

The transmitted power in fact is generally "redundant". A reduction of the transmitted power, of the order of 3 to 6db, does not dramatically reduce the range of the reflected path.

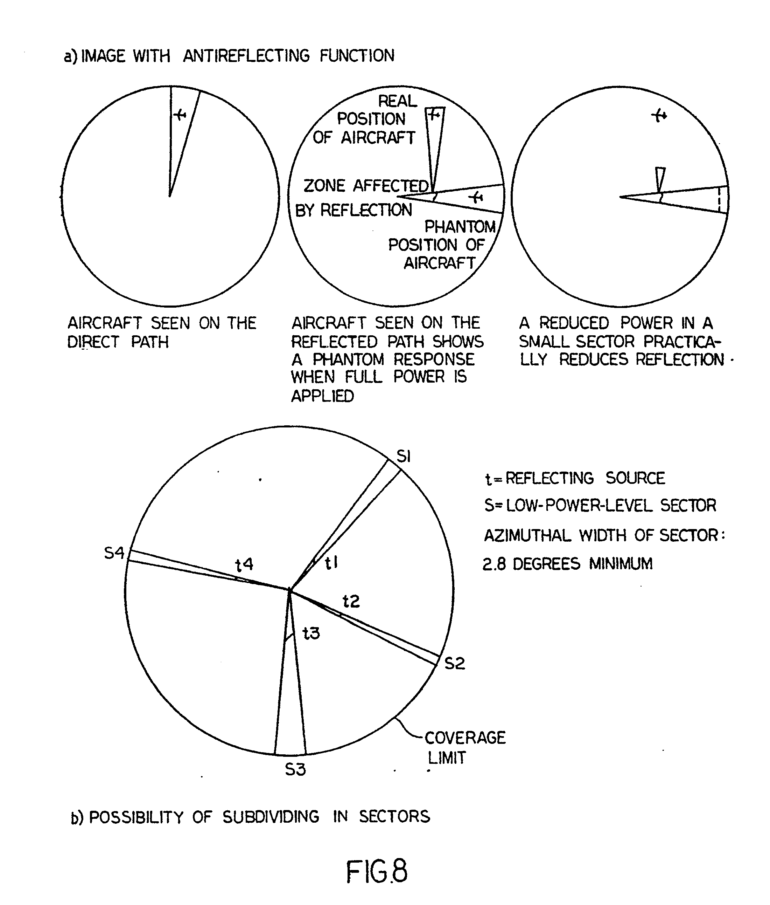

There are therefore large power margins available, and this is schematically represented in the diagrams of figure 8. The disadvantage of this approach is in the reduced performance of the system in terms of radar cover.

It is also known that the "reflectors" occupy a relatively limited azimuthal sector (order of magnitude of the antenna beam). The technical knowledge forming the basis of the present invention therefore consist in limiting the transmission power on ly in the angular sectors necessary.

b) As regards the interrogation on behalf of the side lobes, it is proposed to strengthen in an additive way the level of the impulse P2 with respect to the impulses P1 and P3. If the phenomenon presents aspects of azimuthal stazionarity the action can be limited only to the angular sector of interest. The strengthening of the ratio P2/P1 is evidently realizable by means of a reduction in power associated with the impulses P1, P3. It is still evident that the safeguard of the power margins, will be carried out by applying this function in a sectorial method.

c) The same technique mentioned in the preceding paragraph (b) can be used for narrowing the effective interrogation beam and the azimuthal sectoralization can evidently also be applied.

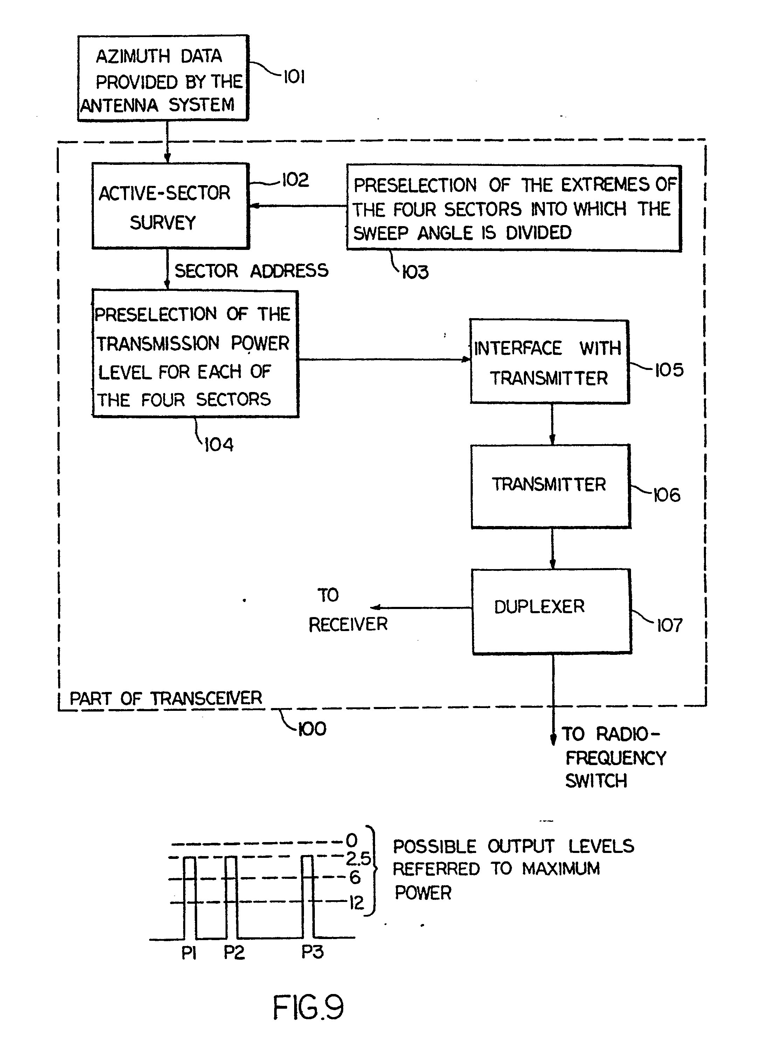

Practical ways of realizing the technical knowledge of the pre sent invention will now described. With reference to figure 9, in 100 is indicated a part of the interrogation transceiver.

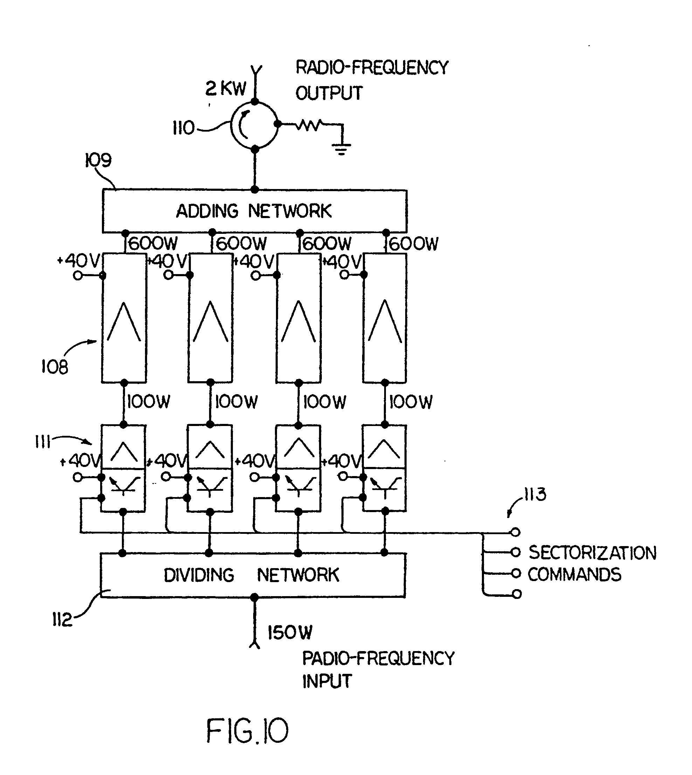

From the block 101 are available azimuth data supplied by the ro tation system of the directional antenna. The data from block 101 are taken to the detecting unit 102 of the active sector, to which are supplied also the data from block 103 which is pre-selection of the extremes of the four sectors in which the antennas special turn angle is divided. At the output of block 102 there is practically a sector address for commanding block 104 which is the pre-selection of the trans mission power levels for each of the four sectors for which it is intended to act. The output of block 104 is composed of an in terface with the transmitter indicated in 105 for the command of the transmitter 106 which in turn is connected with a duplexer 107. The structure of the transmitter is illustrated in more detail in figure 10.

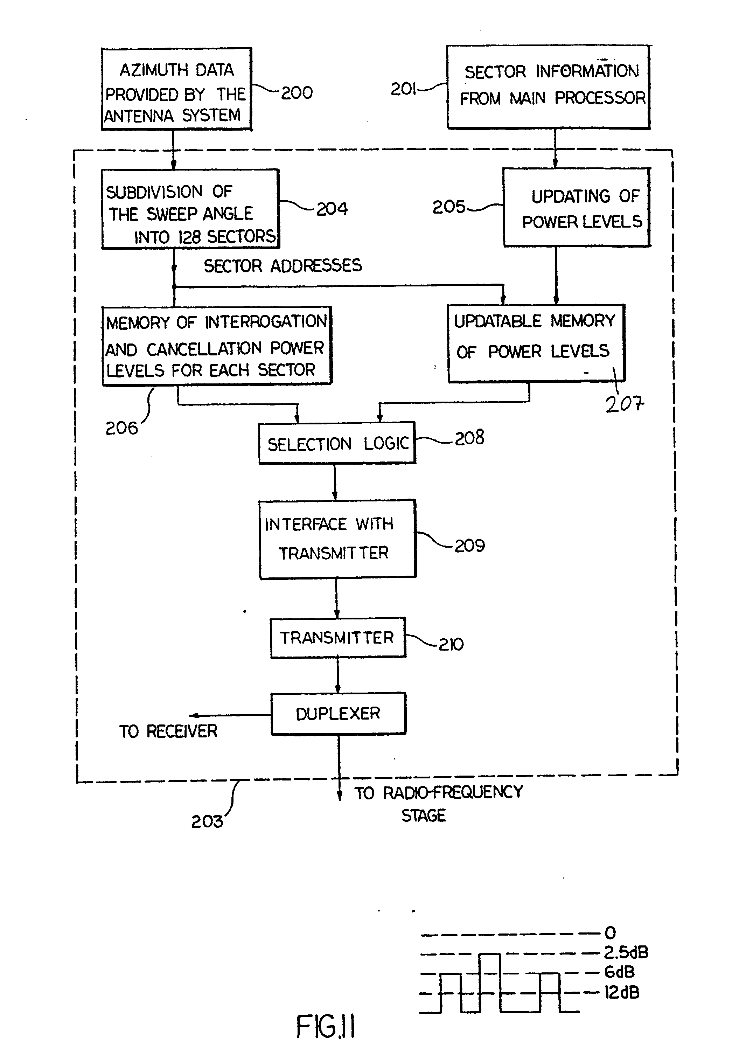

As can be noted in figure 10 we forsee four power amplification units 108 connected to a summing network 109, whose output, by means of the circulator 110 constitutes the radio-frequency out put. The units 108 are driven by amplifier stages 111 operating in class C with controllable power, biased on one side by a radio-frequency power dividing network 112. The units 111 are controllable for example by means of their direct-current supply, with numerous commands 113. Typically the commutation time is of the order of one millisecond for which the impulses constituting a message in transmission present the same level. In figure 11 another realisation is shown, in which the azimuth data are supplied from a block 200, and from a block 201 are sup plied data related to the sector information from a central processor of the radar system.

In the block 203 which constitutes part of the transceiver sub division of the antenna's exploration turn angle into 128 sectors is carried out in block 204. At the same time block 205 supplies an updating of the power levels. On the output of block 204 there are sector addresses which are supplied to a first memory 206 of the interrogation and suppression power levels for each sector. At the same time the sector addresses and the updating data of the power levels supplied by block 205 are conducted to another memory 207 up-datable with relation to the po wer levels.

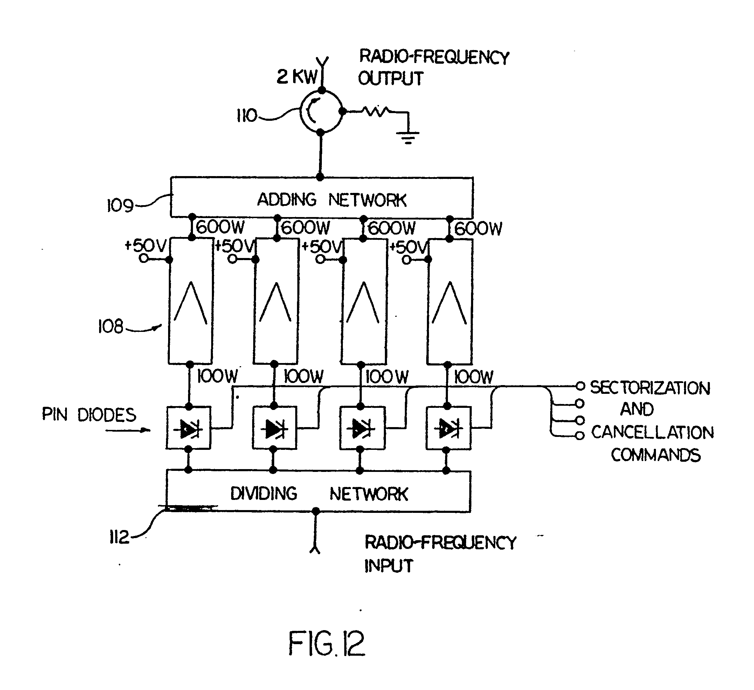

The outputs of the memories 206 and 207 are combined in a selection logic 208 for the command of the interface 209 with the transmitter and then the transmitter 210. In figure 12 is shown a typical diagram of a transmitter in which are utilized PIN diode modulators for controlling the emis sion power.

One must note that the diagrams of figure 12 and figure 10 are substantially changeable, as is evident to a person experienced in this field. One must however notice that in the structure of figure 12, since PIN diode elements are utilized, the commutation times are extremely reduced, of the order of tenths of na noseconds, as compared with the structure of figure 10. This allows a greater resolution in the power variations with the antenna rotation, and also to select in a convenient way the relative amplitudes of the various impulses P1, P2, P3 in ratio with one another.

The electronic technique of memorizing and processing data mentioned with reference to figures 9 and 11 are at the fingertips of any expert in the field and consequently it is felt unnecessary to describe them in detail.

The technical knowledge according to the present invention presents the following advantages from an operational point of view.

- The techniques described earlier are "sectorially" inserted, only where needed, in such a way as to leave unaltered the performances in terms of radar coverage, in the "clear" sectors.
- In the control of the "reflections" with respect to the techniques which are based on the blinding of the transponders from the side lobes of the directional antenna, one tends to diminish the interferences towards the interrogators which realize the adjacent radar coverage.

As regards the realization criterion of the transmission unit it is pointed out that with respect to alternative solutions, the solution adopted according to the present invention, permits power variations to be carried out by means of circuits which can be realized by components easily available, are economic, much contained in space taken-up and fully satisfying the systems exigencies mentioned, in terms of both precision and velocity (commutation time ~ 100ns).

This is made possible because the commutators, operating on the radio-frequency input signals of the single amplifier modules, must control power levels which are less, to those nominally emitted from the transmitter, by a factor equal to the product of the number of active elements in parallel and their gain. In practical situations this quantity is between 25 and 50.

## Claims

1. A radar interrogator apparatus for locating an object carrying a transponder, comprising
   - antenna means (SA) including a rotating antenna,
   - transmitter means (106, 210) supplying to said antenna means sequences of pulses at a predetermined radio frequency,
   - receiving means connected to said antenna means, the receiving means being arranged to derive , from transponder reply pulses generated in response to a transmitted pulse sequence, information relating to the location of the object associated with the replying transponder,
   - suppression means for suppressing the generation of transponder reply pulses in response to transmitter pulses travelling to the transponder along an indirect path owing to reflection of the transmitter pulses at obstacles situated at predetermined azimuth directions with regard to the rotating antenna, the suppression means including means (108 - 113) for reducing the power of the pulses transmitted by the antenna means whenever the rotating antenna points in one of said predetermined azimuth directions, characterised in that
   - the power reducing means comprises
   (i) a plurality of amplifier stages (108),
   (ii) a plurality of power modulating stages (111) each of which has an output connected to an input of a different one of the amplifier stages,
   (iii) an RF power dividing network (112) having an input connected to the transmitter means and having a plurality of outputs each of which is connected to the input of a different one of the power modulating stages,
   (iv) signal combining means (109) arranged to supply to the antenna means the combined output signals from the amplifier stages,
   (v) control means (101-105; 200-209) for generating modulation control signals for the power modulating stages, said modulation control signals depending on the azimuth position of the rotating antenna in such a way that the power of the combined output signals is reduced by a selected amount for each of said predetermined azimuth directions.

2. Apparatus according to claim 1 wherein the control means are arranged to provide for predetermined amplitude ratios between selected pulses of each pulse sequence.

3. Apparatus according to claim 1 or 2 wherein each power modulating stage consists of a preamplifier (111) whose gain is controlled by the modulation control signals.

4. Apparatus according to claim 1 or 2 wherein each power modulating stage includes a controllable attenuating member consisting of a PIN diode.

**Revendications**

1. Appareil détecteur radar destiné à localiser un objet transportant un répondeur, comprenant:
   - un moyen d'antenne (SA) comportant une antenne rotative,
   - un moyen d'émission (106, 210) fournissant audit moyen d'antenne des séquences d'impulsions sur une radio-fréquence ou HP déterminée à l'avance,
   - un moyen de réception relié audit moyen d'antenne, le moyen de réception étant agencé pour déduire, à partir des impulsions de réponse du répondeur créées en réponse à une séquence d'impulsions émises, une information relative à la position de l'objet associé au répondeur émettant de la réponse,
   - un moyen de suppression destiné à supprimer la création des impulsions de réponse du répondeur, en réponse aux impulsions de l'émetteur allant jusqu'au répondeur en suivant un trajet indirect dû à la réflexion des impulsions de l'émetteur sur des obstacles situés dans des directions d'azimut déterminées à l'avance par rapport à l'antenne tournante, le moyen de suppression comprenant des moyens (108 à 113) destinés à réduire la puissance des impulsions émises par le moyen d'antenne, chaque fois que l'antenne tournante est placée dans une desdites directions d'azimut déterminées à l'avance, caractérisé en ce que le moyen de réduction de puissance comprend:
   (i) une pluralité d'étages d'amplification (108);
   (ii) une pluralité d'étages de modulation de puissance (111), dont chacun a une sortie connectée à l'entrée d'un étage d'amplification différent;
   (iii) un circuit (112) de division de la puissance RF, dont l'entrée est connectée au moyen d'émission et qui comporte une pluralité de sorties, dont chacune est connectée à l'entrée d'un étage de modulation de puissance différent;
   (iv) un moyen de combinaison de signaux (109) agencé de façon à fournir au moyen d'antenne, les signaux de sortie combinés, en provenance des étages d'amplification;
   (v) des moyens de commande (101 à 105, 200 à 209) destiné à créer de signaux de commande de modulation à destination des étages de modulation de la puissance, lesdits signaux de contrôle de modulation dépendant de la position en azimut de l'antenne tournante d'une façon telle que la puissance des signaux de sortie combinés, se trouve réduite d'un montant choisi pour chacune desdites directions d'azimut déterminées à l'avance.

2. Appareil selon la revendication 1, dans lequel les moyens de commande sont agencés de façon à fournir des rapports d'amplitude déterminés à l'avance, entre les impulsions choisies de chaque séquence d'impulsions.

3. Appareil selon la revendication 1 ou 2, dans lequel chaque étage de modulation de puissance consiste en un préamplificateur (111) dont l'amplification est commandée par les signaux de commande de modulation.

4. Appareil selon la revendication 1 ou 2, dans lequel chaque étage de modulation de puissance comprend un organe d'atténuation commandable constitué par une diode PIN.

**Ansprüche**

1. Radar-Abfragegerät für das Lokalisieren eines einen Transponder tragenden Objekts, umfassend
   - eine Antennenanordnung (SA) mit einer Drehantenne,
   - eine Sendereinrichtung (106, 210), die an die Antennenanordnung Impulssequenzen mit einer vorbestimmten Hochfrequenz liefert,
   - eine an die Antennenanordnung angeschlossene Empfängereinrichtung, die derart ausgebildet ist, daß sie von ansprechend auf eine gesendete Impulssequenz erzeugte Transponder-Antwortimpulse Information in bezug auf die Lage des Objekts ableitet, dem der antwortende Transponder zugeordnet ist,
   - eine Unterdrückungseinrichtung zum Unterdrücken der Erzeugung von Transponder-Antwortimpulsen in Abhängigkeit von Senderimpulsen, die auf Grund von Reflexion der Senderimpulse an in vorbestimmten Azimutwinkeln bezüglich der Drehantenne gelegenen Hindernissen entlang einem indirekten Weg zu dem Transponder laufen, wobei die Unterdrückungseinrichtung eine Einrichtung (108 - 113) aufweist, die die Leistung der von der Antennenanordnung gesendeten Impulse immer dann reduziert, wenn die Drehantenne in eine der vorbestimmten Azimutrichtungen weist, dadurch gekennzeichnet, daß

- die Einrichtung zum Reduzieren der Leistung aufweist:

(i) mehrere Verstärkerstufen (108),

(ii) mehrere Leistungs-Modulationsstufen (111), Von denen jede mit einem Ausgang an einen Eingang einer anderen der Verstärkerstufen angeschlossen ist,

(iii) ein HF-Leistungs-Teilernetzwerk (112), das mit einem Eingang an die Sendereinrichtung angeschlossen ist und mehrere Ausgänge aufweist, von denen jeder an den Eingang eines anderen der Leistungs-Modulationsstufen angeschlossen ist,

(iv) eine Signal-Kombiniereinrichtung (109), die derart ausgebildet ist, daß sie an die Antennenanordnung die kombinierten Ausgangssignale von den Verstärkerstufen liefert,

(v) eine Steuereinrichtung (101-105; 200-209) zum Erzeugen von Modulations-Steuersignalen für die Leistungs-Modulationsstufen, wobei die Modulations-Steuersignale derart von der Azimutposition der Drehantenne abhängen, daß die Leistung der kombinierten Ausgangssignale für jede der vorbestimmten Azimutrichtungen um einen ausgewählten Betrag reduziert wird.

2. Gerät nach Anspruch 1, bei dem die Steuereinrichtung derart ausgebildet ist, daß sie vorbestimmte Amplitudenverhältnisse zwischen ausgewählten Impulsen jeder Impulssequenz liefert.

3. Gerät nach Anspruch 1 oder 2, bei dem jede Leistungs-Modulationsstufe aus einem Vorverstärker (111) besteht, dessen Verstärkung von den Modulations-Steuersignalen gesteuert wird.

4. Gerät nach Anspruch 1 oder 2, bei dem jede Leistungs-Modulationsstufe ein steuerbares Dämpfungsglied, das aus einer PIN-Diode besteht, enthält.

FIG. I

a) INTERROGATION WAVEFORM

PI

P2

P3

0.8 μsec

2 μsec

T

| MODE | T |
|------|------|
| 1 | 3 μsec |
| 2 | 5 |
| 3/A | 8 |
| B | 17 |
| C | 21 |
| D | 25 |

20.3 μsec

1.45 μsec

0.45 μsec

FI  CI  AI  C2  A2  C4  A4  X  BI  DI  B2  D2  B4  D4  F2

b) RESPONSE WAVEFORM

FIG.2

TRANSPONDER RESPONDS 9dB

TRANSPONDER MAY SUPPRESS
OR RESPOND 0dB

TRANSPONDER
SUPPRESSES

PI   P2   P3

(CONTROL   PULSE SYSTEM
PULSE)   3

DIRECTIONAL BEAM
(PI AND P3)

OMNIDIRECTIONAL PATTERN
(P2)

FIG.3

VERTICAL DIAGRAM

RADAR ANTENNA

TYPICAL I<sup>st</sup> MAXIMUM

AIRPORT STRUCTURES

CITY BUILDINGS

a) REFLECTING SOURCES

REAL TARGET RT

FALSE TARGET FT

AIRCRAFT V

REFLECTING SURFACE RS

RADAR ANTENNA R

b) INTERROGATION ON THE REFLECTED PATH

c) PRESENTATION OF THE RESULTING PPI

FIG.4

SECONDARY ANTENNA SA

PRIMARY ANTENNA PA

RADOME RD

a) RADOME

——— POLAR DIAGRAM IN FREE SPACE
- - - - RADOME EFFECTS

POSSIBLE INTERROGATION OF THE SIDE LOBES

$\Sigma$

C

b) HORIZONTAL DIAGRAMS - SUM AND CHECK

FIG. 5

REFLECTOR

REFLECTED PATH

DIRECT PATH

a) REFLECTION GEOMETRY

DELAY CAUSED BY THE PATH DIFFERENCE

$\Delta t$

RECEPTION
THRESHOLD OF
ON-BOARD TRANSPON-
DER

PI P2          P3                    PI P2          P3                    TIME

DIRECT INTERROGATION                 REFLECTED INTERROGATION

OF THE LOBES                         (FROM THE MAIN LOBE)

b) INPUT SIGNALS AT THE TRANSPONDER

FIG.6

PI P2 P3    PI    P3    DIRECTIONAL ANTENNA

TRANSCEIVER    RADIO-FREQUENCY SWITCH    P2    OMNIDIRECTIONAL ANTENNA

SWITCH CONTROL

a) CONVENTIONAL SIDE-LOBE-SUPPRESSION (SLS) TECHNIQUE

TRANSCEIVER

PI P2 P3

PI P2 P3    PI    P3 $2/3$    DIRECTIONAL ANTENNA

$2/3$    RADIO-FREQUENCY SWITCH

POWER DIVIDER

PI P2 P3

$1/3$    RADIO-FREQUENCY SWITCH    PI    P2 $2/3$ $1/3$    OMNIDIRECTIONAL ANTENNA

SWITCH CONTROL

$1/2$ , $2/3$ REPRESENT THE POWER LEVEL REFERRED TO TRANSMITTER OUTPUT

b) IMPROVED-INTERROGATOR SIDE-LOBE-SUPPRESSION (IISLS) TECHNIQUE

SLS    IISLS

c) SIGNALS IN THE "AREA": ⎯⎯ PI,P3  --- P2

FIG.7

14

a) IMAGE WITH ANTIREFLECTING FUNCTION

AIRCRAFT SEEN ON THE
DIRECT PATH

REAL
POSITION
OF AIRCRAFT

ZONE AFFECTED
BY REFLECTION

PHANTOM
POSITION OF
AIRCRAFT

AIRCRAFT SEEN ON THE
REFLECTED PATH SHOWS
A PHANTOM RESPONSE
WHEN FULL POWER IS
APPLIED

A REDUCED POWER IN A
SMALL SECTOR PRACTICA-
LLY REDUCES REFLECTION ·

S1
S4
t4    t1
t2
t3
S2
S3
COVERAGE
LIMIT

t = REFLECTING SOURCE

S = LOW-POWER-LEVEL SECTOR

AZIMUTHAL WIDTH OF SECTOR:

2.8 DEGREES MINIMUM

b) POSSIBILITY OF SUBDIVIDING IN SECTORS

# FIG.8

```
┌─────────────────────┐
│  AZIMUTH  DATA      │
│  PROVIDED BY THE    │──── IOI
│  ANTENNA SYSTEM     │
└─────────────────────┘
          │
          ▼
┌─────────────────┐  ──IO2      ┌──────────────────────────────┐
│  ACTIVE-SECTOR  │             │ PRESELECTION OF THE EXTREMES OF│
│     SURVEY      │◄────────────│ THE FOUR SECTORS INTO WHICH THE│
└─────────────────┘             │ SWEEP ANGLE IS DIVIDED         │
          │                     └──────────────────────────────┘
          │  SECTOR  ADDRESS              └IO3
          ▼
┌─────────────────────┐
│ PRESELECTION OF THE │
│ TRANSMISSION POWER  │              ┌──────────────────┐
│ LEVEL FOR EACH OF   │─────────────►│ INTERFACE  WITH  │──IO5
│ THE FOUR SECTORS    │              │   TRANSMITTER    │
└─────────────────────┘              └──────────────────┘
          └IO4                               │
                                             ▼
                                   ┌──────────────────┐
                                   │   TRANSMITTER    │──IO6
                                   └──────────────────┘
                                             │
                    TO                       ▼
               ◄────────────         ┌──────────────────┐
                 RECEIVER            │    DUPLEXER       │──IO7
                                     └──────────────────┘
                                             │
 PART OF TRANSCEIVER                         ▼
          └IOO                        TO RADIO-
                                      FREQUENCY
                                      SWITCH
```

POSSIBLE OUTPUT LEVELS
REFERRED TO MAXIMUM
POWER

0
2.5
6
12

PI   P2   P3

# FIG.9

FIG.10

| AZIMUTH DATA PROVIDED BY THE ANTENNA SYSTEM | 200 |
| SECTOR INFORMATION FROM MAIN PROCESSOR | 201 |

SUBDIVISION OF THE SWEEP ANGLE INTO 128 SECTORS — 204

205 — UPDATING OF POWER LEVELS

SECTOR ADDRESSES

MEMORY OF INTERROGATION AND CANCELLATION POWER LEVELS FOR EACH SECTOR

UPDATABLE MEMORY OF POWER LEVELS

206

207

SELECTION LOGIC — 208

INTERFACE WITH TRANSMITTER — 209

TRANSMITTER — 210

DUPLEXER

TO RECEIVER

203

TO RADIO-FREQUENCY STAGE

FIG.II

— 0
— 2.5dB
— 6dB
— 12dB

18

FIG.12